# EUROPÄISCHE PATENTSCHRIFT

(11) **EP 3 380 739 B1**
(45) Veröffentlichungstag und Bekanntmachung des Hinweises auf die Patenterteilung: **25.03.2020**
(21) Anmeldenummer: 16816184.2
(22) Anmeldetag: 18.11.2016
(51) Int. Cl.: B23Q 27/00, B23C 3/00

(54) **VERFAHREN ZUM FERTIGEN EINES MASSIVBAUTEILS SOWIE EIN MASSIVBAUTEIL**
METHOD FOR PRODUCING A SOLID COMPONENT, AND A SOLID COMPONENT
PROCÉDÉ DE FABRICATION D'UN COMPOSANT SOLIDE ET COMPOSANT SOLIDE

(30) Priorität: 24.11.2015 DE 102015223180
(43) Veröffentlichungstag der Anmeldung: 03.10.2018
(73) Patentinhaber: Schaeffler Technologies AG & Co. KG, 91074 Herzogenaurach (DE)
(72) Erfinder: SANDERS, Bernhard, 90574 Roßtal (DE); NÖTH, Tobias, 96160 Geiselwind (DE)
(86) Internationale Anmeldenummer: PCT/DE2016/200524
(87) Internationale Veröffentlichungsnummer: WO 2017/088871

(56) Entgegenhaltungen:
- DE-A1- 4 212 238
- DE-C2- 4 034 516

## Beschreibung

Die Erfindung betrifft ein Verfahren zum Fertigen eines Massivbauteils mit den Merkmalen des Anspruchs 1 sowie ein Massivbauteil, welches mittels des Verfahrens gefertigt ist.

Käfige in Wälzlagern dienen dazu, Wälzkörper zu führen und voneinander zu beabstanden. Die Käfige sind oftmals ringförmig ausgebildet und weisen Fenster auf, in denen die Wälzkörper angeordnet sind. Neben Kunststoffkäfigen und Blechkäfigen sind sogenannte Massivkäfige als Massivbauteile bekannt, welche aus einem massiven Halbzeug mit trennenden Verfahren herausgearbeitet werden. Neben dem hohen Materialbedarf für die Massivkäfige führt insbesondere die trennende Bearbeitung zu hohen Fertigungskosten, da oftmals die Fenster nacheinander ausgefräst werden.

Einen anderen Ansatz zur Herstellung von Massivkäfigen wird in der Druckschrift DE 40 34 516 C2 vorgeschlagen, die wohl den nächstkommenden Stand der Technik bildet. In der Druckschrift wird ein Verfahren beschrieben, wobei ein Werkstück und eine Schneide eines Werkzeugs derart relativ zueinander bewegt werden, dass die Schneide in einen etwa blütenförmigen Verlauf relativ zu dem Werkstück geführt wird und auf diese Weise Fenster in das Werkstück eingebracht werden, um einen Käfig zu bilden. Bei einer Bearbeitungsvariante wird die Schneide radial außerhalb von dem Werkstück geführt, wobei das Material aus dem Werkstück "ausgelöffelt" wird. Ein ähnliches Herstellungsverfahren ist auch aus der Druckschrift DE 42 12 238 A1 bekannt.

Es ist Aufgabe der Erfindung, ein Verfahren zum Fertigen eines Massivbauteils vorzuschlagen, welches eine hohe Fertigungsgenauigkeit erlaubt. Diese Aufgabe wird durch ein Verfahren mit den Merkmalen des Anspruchs 1 sowie durch ein Massivbauteil mit den Merkmalen des Anspruchs 9 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Verfahren zum Fertigen eines Massivbauteils. Das Massivbauteil wird ausgehend von einem massiven Halbzeug durch trennende Verfahrensschritte gefertigt. Das Massivbauteil und/oder das Halbzeug bestehen vorzugsweise aus Metall. Prinzipiell kann es sich bei dem Metall um einen Stahlwerkstoff handeln, es ist jedoch auch möglich, dass das Massivbauteil aus einem Buntmetall, insbesondere aus einer Kupferlegierung, besteht.

Das Massivbauteil definiert eine Bauteildrehachse, wobei die Bauteildrehachse durch die Rotationsachse des Massivbauteils im Betrieb festgelegt ist. Das Massivbauteil weist eine Mehrzahl von Taschen auf, welche in Umlaufrichtung um die Bauteildrehachse vorzugsweise regelmäßig voneinander beabstandet sind. Zwischen den Taschen sind vorzugsweise Zwischenbereiche, insbesondere Stege angeordnet. Die Taschen weisen in Umlaufrichtung jeweils eine erste und eine zweite Taschenseite auf, die durch die angrenzenden Zwischenbereichsseiten, insbesondere Stegseiten, gebildet sind. Die Taschen sind als Sacktaschen oder als Durchgangsöffnungen in dem Massivbauteil ausgebildet. Insbesondere ist jede Tasche randseitig durch zwei Zwischenbereiche, insbesondere Stege, begrenzt.

Das Verfahren umfasst mindestens die folgenden Schritte, vorzugsweise in der beschriebenen Reihenfolge:
In einem Rohbearbeitungsschritt, vorzugsweise Vorschritt, wird ein Bauteilrohling mittels eines Rohbearbeitungswerkzeugs vorzugsweise aus dem Halbzeug gefertigt, wobei der Bauteilrohling eine Mehrzahl von Rohtaschen aufweist, welche vorzugsweise durch Rohzwischenbereiche, insbesondere Rohstege, voneinander abgetrennt oder beabstandet sind. Der Bauteilrohling ist insbesondere als ein Zwischenprodukt ausgebildet.

Der Bauteilrohling ist insbesondere als ein Ring oder Zylinder ausgebildet oder weist zumindest einen Ringabschnitt bzw. Zylinderabschnitt auf, wobei die Rohtaschen Öffnungen und/oder Durchgänge in radialer Richtung in dem Ring bzw. Ringabschnitt bilden. Alternativ sind die Rohtaschen als Rohsacktaschen ausgebildet. Die Rohzwischenbereiche, insbesondere Rohstege, befinden sich an den Positionen, an denen nach weiteren Fertigungsschritten die Zwischenbereiche, insbesondere Stege, angeordnet sind. Insbesondere entspricht die Anzahl der Rohzwischenbereiche, insbesondere Rohstege, der späteren Anzahl der Zwischenbereiche, insbesondere Stege.

In einem weiteren Schritt werden die ersten Taschenseiten mittels einer Werkzeugschneide insbesondere trennend und/oder spanend und/oder spanabhebend ausgebildet. Die Ausbildung erfolgt in Endkontur, so dass die gebildeten Taschenseiten ohne weitere Nachbearbeitungsschritte bestimmungsgemäß einsetzbar sind. Die Werkzeugschneide wird in einem ersten Zykloidenbearbeitungsschritt relativ zu dem Bauteilrohling entlang einer ersten Zykloidenbahn geführt. Die Werkzeugschneide wird relativ zu dem Bauteilrohling entlang der ersten Zykloidenbahn geführt, wobei der Bauteilrohling in einer ersten Bauteildrehrichtung um die Bauteildrehachse rotiert.

Es ist vorgesehen, dass die ersten Taschenseiten mittels der Werkzeugschneide geschnitten werden. Ergänzend liegt ein Spanwinkel der Werkzeugschneide beim Fertigen der ersten Taschenseiten im Bereich von -15° bis 0° . Insbesondere werden in dem ersten Zykloidenbearbeitungsschritt die ersten Taschenseiten nicht mittels "Schaben" gefertigt. Besonders bevorzugt wird die Werkzeugschneide kontaktfrei zu den zweiten Taschenseiten beziehungsweise den Bereichen der Rohtaschen, welche nachfolgend die zweiten Taschenseiten bilden, geführt.

Nachfolgend wird die Bauteildrehrichtung umgekehrt und der Bauteilrohling wird in einer Bauteilgegenrichtung rotiert.

In einem weiteren Schritt werden die zweiten Taschenseiten in Endkontur mittels einer weiteren Werkzeugschneide gefertigt, wobei die Werkzeugschneide in einem zweiten Zykloidenbearbeitungsschritt relativ zu dem Bauteilrohling entlang einer zweiten Zykloidenbahn geführt wird. Die weitere Werkzeugschneide wird in dem zweiten Zykloidenbearbeitungsschritt relativ zu dem um die Bauteildrehachse in der Bauteilgegendrehrichtung rotierenden Bauteilrohling entlang der zweiten Zykloidenbahn zur Bearbeitung der Rohtaschen geführt. Es ist vorgesehen, dass die zweiten Taschenseiten mittels der weiteren Werkzeugschneide geschnitten werden und dass ein Spanwinkel der weiteren Werkzeugschneide beim Fertigen der zweiten Taschenseiten in einem Bereich zwischen -15° und 0° liegt. Insbesondere werden in dem zweiten Zykloidenbearbeitungsschritt die zweiten Taschenseiten nicht mittels "Schaben" gefertigt. Besonders bevorzugt wird die Werkzeugschneide kontaktfrei zu den ersten Taschenseiten geführt.

Der Spanwinkel wird vorzugsweise durch den Winkel zwischen der Werkstoffebene vor dem Schnitt und der Spanfläche der Werkzeugschneide abzüglich 90° definiert.

Unter einer Zykloidenbahn - auch zyklische Kurve, Radlauf- oder Rollkurve zu nennen - wird vorzugsweise eine Bahn verstanden, die einen Kreispunkt beim Abrollen eines Kreises auf einer Leitkurve beschreibt. Die Leitkurve ist beispielsweise als ein konzentrischer Kreis um die Bauteildrehachse ausgebildet. Insbesondere ist die Zykloidenbahn als eine verlängerte Zykloidenbahn ausgebildet, wobei die Werkzeugschneide außerhalb des auf der Leitkurve abrollenden Kreises angeordnet ist. Alternativ oder ergänzend weist die Zykloidenbahn als verlängerte Zykloidenbahn an den Spitzen Schleifen auf. Die Schleifen bilden die Schneidbahn der Werkzeugschneide in dem Bauteilrohling und definieren somit die geometrische Form der Taschenseiten.

Es ist dabei eine Überlegung der Erfindung, dass durch das Fertigen der ersten und zweiten Taschenseiten jeweils mittels eines Schneidens und nicht mittels eines Schabens und mit einem Spanwinkel der Werkzeugschneide, welcher zwischen -15° und 0° liegt, die Oberflächengüte der Taschenseiten zum einen von der ersten oder zweiten Taschenseite gleich hoch ist und zum zweiten eine ausreichende Güte aufweist, sodass eine Endbearbeitung entfallen kann bzw. die Endbearbeitung durch den ersten und zweiten Zykloidenbearbeitungsschritt gegeben ist. Insbesondere werden die erste und zweite Taschenseite durch den ersten und zweiten Zykloidenbearbeitungsschritt in eine Endform gebracht. Somit ist es möglich, ein Massivbauteil kostengünstig über ein Zykloidbearbeitungsverfahren zu fertigen und zugleich eine hohe Oberflächengüte und/oder Formhaltigkeit beziehungsweise eine niedrige Toleranz zu erreichen.

Kurz gesagt teilt sich das Verfahren in drei Schritte auf, wobei in einem Vorschritt die Rohtaschen eingebracht werden, in einem ersten Zykloidenbearbeitungsschritt die ersten Taschenseiten geschnitten werden und in einem zweiten Zykloidenbearbeitungsschritt die zweiten Taschenseiten geschnitten werden. Dabei kann es vorgesehen sein, dass die Rohtaschen mittels Schruppen, die ersten und zweiten Taschenseiten dagegen mittels Schlichten eingebracht werden.

Bei einer bevorzugten Ausgestaltung der Erfindung wird in dem ersten und/oder in dem zweiten Zykloidenbearbeitungsschritt der Bauteilrohling um die Bauteildrehachse und die Werkzeugschneide um eine Werkzeugdrehachse rotiert. Die Bauteildrehachse und die Werkzeugdrehachse sind parallel zueinander, jedoch räumlich um einen Zustellabstand voneinander versetzt oder beabstandet angeordnet. Der Zustellabstand zwischen der Bauteildrehachse und der Werkzeugdrehachse wird im Laufe des ersten und/oder des zweiten Zykloidenbearbeitungsschritts verändert.

Besonders bevorzugt ist vorgesehen, dass in dem ersten Zykloidenbearbeitungsschritt der Bauteilrohling in einer Bauteildrehrichtung und die Werkzeugschneide in einer Werkzeugdrehrichtung rotiert werden. In dem zweiten Zykloidenbearbeitungsschritt werden dagegen der Bauteilrohling in einer Bauteilgegendrehrichtung und die Werkzeugschneide in einer Werkzeuggegendrehrichtung, also jeweils in der Gegenrichtung, rotiert. Alternativ oder ergänzend ist es vorteilhaft, dass die erste Zykloidenbahn gegenläufig zu der zweiten Zykloidenbahn ausgebildet ist. Auf diese Weise können gleiche oder zumindest ähnliche Schneidbedingungen für die erste und die zweite Taschenseite erreicht werden.

Vorzugsweise sind die erste Zykloidenbahn und die zweite Zykloidenbahn phasenversetzt zueinander angeordnet, jedoch in der Form und/oder in dem Verlauf besonders bevorzugt identisch ausgebildet. Durch den Phasenversatz, insbesondere um einen Offset-Winkel um die Bauteildrehachse, wird erreicht, dass in dem ersten Zykloidenbearbeitungsschritt nur die erste Taschenseite gefertigt, insbesondere geschnitten wird und die zweite Taschenseite kontaktfrei bleibt und in dem zweiten Zykloidenbearbeitungsschritt nur die zweite Taschenseite gefertigt, insbesondere geschnitten wird und die erste Taschenseite kontaktfrei bleibt.

Es kann vorgesehen sein, dass die Taschenseiten mit einer Bearbeitung radial von außen oder radial von innen in den Bauteilrohling eingebracht werden. In dem ersten Fall arbeitet die Werkzeugschneide von außen nach innen bezogen auf die Bauteildrehachse, bei dem zweiten Fall arbeitet die Werkzeugschneide von innen nach außen, ebenfalls bezogen auf die Bauteildrehachse. Vorzugsweise werden die Drehrichtungen des Bauteilrohlings und der Werkzeugschneide wie folgt gewählt: Die Werkzeugschneide und der Bauteilrohling rotieren entgegengesetzt oder gegensinnig, sofern die Werkzeugschneide an einem Außenumfang des Bauteilrohlings beginnend schneidet. Die Werkzeugschneide und der Bauteilrohling rotieren in gleicher Richtung oder gleichsinnig, sofern der Bauteilrohling ringförmig ausgebildet ist und die Werkzeugschneide an einem Innenumfang des Bauteilrohlings beginnend schneidet.

Bei einer bevorzugten Realisierung der Erfindung weist die Werkzeugschneide und die weitere Werkzeugschneide einen Anstellwinkel relativ zu einem Radialvektor zu der Käfigdrehachse als Bauteildrehachse auf. Es ist bevorzugt, dass der Anstellwinkel in dem ersten und in dem zweiten Zykloidenbearbeitungsschritt unterschiedlich ausgebildet ist. Durch den unterschiedlichen Anstellwinkel wird erreicht, dass die jeweilige Werkzeugschneide in beiden Zykloidenbearbeitungsschritten schneidend beziehungsweise mit dem genannten Spanwinkel geführt werden kann. Besonders bevorzugt sind die Anstellwinkel in Bezug auf den Radialvektor gleich groß, jedoch sind die Werkzeugschneiden spiegelsymmetrisch zu dem Radialvektor angeordnet. Die Änderung des Anstellwinkels von dem ersten zu dem zweiten Zykloidenbearbeitungsschritt kann auf verschiedene Weise erfolgen:
Zum einen ist es möglich, dass die Werkzeugschneide bei dem Übergang von dem ersten Zykloidenbearbeitungsschritt zu dem zweiten Zykloidenbearbeitungsschritt um 180 Grad um den Radialvektor der Werkzeugdrehachse verschwenkt wird, um die weitere Werkzeugschneide zu bilden. Alternativ ist es möglich, dass zwei unterschiedliche Werkzeugschneiden verwendet werden, welche beispielsweise axial versetzt entlang der Werkzeugdrehachse angeordnet sind. Es ist auch möglich ein Werkzeugwechselsystem einzusetzen, welches die Werkzeugschneiden zwischen den Zykloidenbearbeitungsschritten wechselt.

Bei einer bevorzugten Weiterbildung der Erfindung wird der Zustellabstand in Abhängigkeit einer axialen Position der Werkzeugschneide relativ zu dem Käfigrohling verändert. Durch die Änderung des Zustellabstands wird erreicht, dass die erste und/oder die zweite Taschenseite nicht nur parallel zu der Bauteildrehachse geführt ist bzw. sind, sondern auch eine andere geometrische Form annehmen kann. Besonders bevorzugt wird der Zustellabstand in Abhängigkeit der axialen Position der Werkzeugschneide relativ zu dem Bauteilrohling derart verändert, dass die Taschen trapezförmig ausgebildet sind. Insbesondere sind die Taschen in einer radialen Draufsicht trapezförmig ausgebildet. Der Übergang von rechteckigen Taschen zu trapezförmigen Taschen kann somit in einfacher Weise durch eine Programmierung einer entsprechenden Fertigungseinrichtung erfolgen und verursacht keine weitergehenden Kosten in der Herstellung des Massivbauteils. Alternativ oder ergänzend können auch die Neigung und/oder der Neigungsverlauf der Taschenseiten in radialer Richtung zu der Bauteildrehachse bei der ersten und der zweiten Taschenseite unterschiedlich ausgebildet sein. Betrachtet man eine Stirnseite der Tasche, also insbesondere einen Bodenbereich oder einen Deckenbereich in axialer Richtung, so können die Begrenzungen der Stirnseiten in Umlaufrichtung asymmetrisch zueinander ausgebildet sein. Insbesondere können die Übergänge zu den Taschenseiten trapezfömig und/oder unabhängig zueinander ausgebildet sein. Insbesondere weist jede der Taschen zwei Stirnseiten und zwei Taschenseiten auf, wobei mindestens eine der Stirnseiten in Richtung der Bauteildrehachse gesehen annähernd trapezförmig, insbesondere trapezförmig und/oder die Taschenseiten in radialer Draufsicht betrachtet annähernd trapezförmig, insbesondere trapezförmig, ausgebildet sind.

Bei einer bevorzugten Ausgestaltung der Erfindung werden die Rohtaschen in den Bauteilrohling durch einen Vorzykloidenbearbeitungsschritt als ein Rohbearbeitungsschritt eingebracht. Auch in dem Vorzykloidenbearbeitungsschritt wird eine Werkzeugschneide relativ zu dem Bauteilrohling entlang einer Zykloidenbahn, in diesem Fall einer Vorzykloidenbahn geführt. Bei dem Vorzykloidenbearbeitungsschritt ist jedoch vorgesehen, dass beide Taschenseiten der Rohstege im gleichen Vorzykloidenbearbeitungsschritt gefertigt werden. Dies hat den Hintergrund, dass die Taschenseiten durch die nachfolgenden Zykloidenbearbeitungsschritte ohnehin in die Endform gebracht werden, sodass keine besonders hohe Oberflächengüte oder Fertigungsgenauigkeit während des Vorzykloidenbearbeitungsschritts erforderlich ist. Es ist bevorzugt vorgesehen, dass gegenüber der Vorzykloidenbahn die erste Zykloidenbahn in eine erste Umlaufrichtung phasenversetzt und die zweite Zykloidenbahn in eine Gegenrichtung hierzu phasenversetzt angeordnet ist.

Bei einer bevorzugten Realisierung der Erfindung ist das Massivbauteil als ein Massivkäfig für ein Wälzlager ausgebildet. Das Wälzlager ist vorzugsweise als ein Rollenlager und bei besonders bevorzugten Ausgestaltungen der Erfindung als ein Kegelrollenlager ausgebildet. Der Massivkäfig definiert eine Käfigdrehachse als die Bauteildrehachse. Der Massivkäfig weist eine Mehrzahl von Stegen als die Zwischenbereiche auf, wobei zwischen den Stegen die Taschen angeordnet, wobei die Taschen als Aufnahmen von Wälzkörpern des Wälzlagers ausgebildet sind.

Der Massivkäfig kann genau eine umlaufende Reihe von Stegen aufweisen oder auch zwei- oder mehrreihig ausgebildet sein. Optional kann der Massivkäfig Seitenringe oder Zwischenringe aufweisen, wobei die Stege die Seitenringe und/oder Zwischenringe in axialer Richtung verbinden. Seitenringe beziehungsweise Zwischenringe und Stege sind zusammen einstückig ausgebildet.

Die Stege weisen jeweils eine erste und eine zweite Stegseite auf, welche zugleich die Taschenseiten bilden, wobei die Stegseiten zur Anlage der Wälzkörper in Umlaufrichtung um die Käfigdrehachse ausgebildet sind. Insbesondere weisen die Stegseiten Anlageflächen für die Wälzkörper auf. Es weisen alle ersten Stegseiten in eine erste Umlaufrichtung und alle zweiten Stegseiten in eine zweite Umlaufrichtung, welche als Gegenrichtung zu der ersten Umlaufrichtung ausgebildet ist. Die Stegseiten begrenzen die Stege in Umlaufrichtung.

Alternativ oder ergänzend sind die Rohtaschen an der Position in Umlaufrichtung, an der nach den weiteren Verfahrensschritten die Taschen zur Aufnahme der Wälzkörper angeordnet sind. Insbesondere sind die Rohstege jeweils in Umlaufrichtung breiter ausgebildet als die Stege.

Ein weiterer Gegenstand der Erfindung betrifft ein Massivbauteil, insbesondere einen Massivkäfig für ein Wälzlager oder eine Vollwelle, wie dieses zuvor beschrieben wurde, wobei das Massivbauteil durch das Verfahren, wie dies zuvor beschrieben wurde, hergestellt wurde. An dem durch das Verfahren hergestellten Massivbauteil sind an der ersten und an der zweiten Taschenseiten die Schneidspuren des ersten und des zweiten Zykloidenbearbeitungsschritts deutlich zu erkennen. Insbesondere können die Taschen winklige Eckbereiche aufweisen, wohingegen bei anderen Fertigungsverfahren abgerundete Eckbereiche entstehen.

Prinzipiell ist es möglich, dass die Taschen des Massivbauteils in einer radialen Draufsicht einen rechteckigen Querschnitt aufweisen und/oder insbesondere in der Ausgestaltung als Massivkäfig zur Aufnahme von Zylinderrollen ausgebildet sind. Es ist jedoch besonders bevorzugt, dass die Taschen trapezförmig ausgebildet sind und/oder zur Aufnahme von Kegelrollen ausgebildet sind.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine Übersichtsdarstellung des erfindungsgemäßen Verfahrens anhand von unterschiedlichen Fertigungsstufen eines Massivkäfigs;
Figur 2a, b jeweils eine schematische axiale Draufsicht auf eine Fertigungseinrichtung zur Fertigung des Massivkäfigs zur Erläuterung der Zykloidbearbeitung;
Figur 3 eine schematische dreidimensionale Darstellung eines Massivkäfigs mit eingezeichneter Zykloidenbahn;
Figuren 4a, b eine schematische Detaildarstellung eines Vorzykloidenbearbeitungsschritts im Bereich einer Rohtasche;
Figur 4c einen ähnlichen Detailausschnitt wie in den Figuren 4a, b zur Erläuterung der geometrischen Kenngrößen der Bearbeitung;
Figuren 5a, b eine schematische Darstellung der Fertigung der ersten Stegseiten des Massivkäfigs;
Figur 5c eine schematische Darstellung eines Phasenversatzes einer ersten Zykloidenbahn;
Figuren 6a, b eine schematische Darstellung der Fertigung der zweiten Stegseiten;
Figur 6c eine schematische Darstellung eines Phasenversatzes der zweiten Zykloidenbahn;
Figur 7 eine schematische Schnittdarstellung einer Vollwelle als ein weiteres Ausführungsbeispiel der Erfindung;
Figur 8 die Vollwelle in der Figur 7 in radialer Draufsicht.

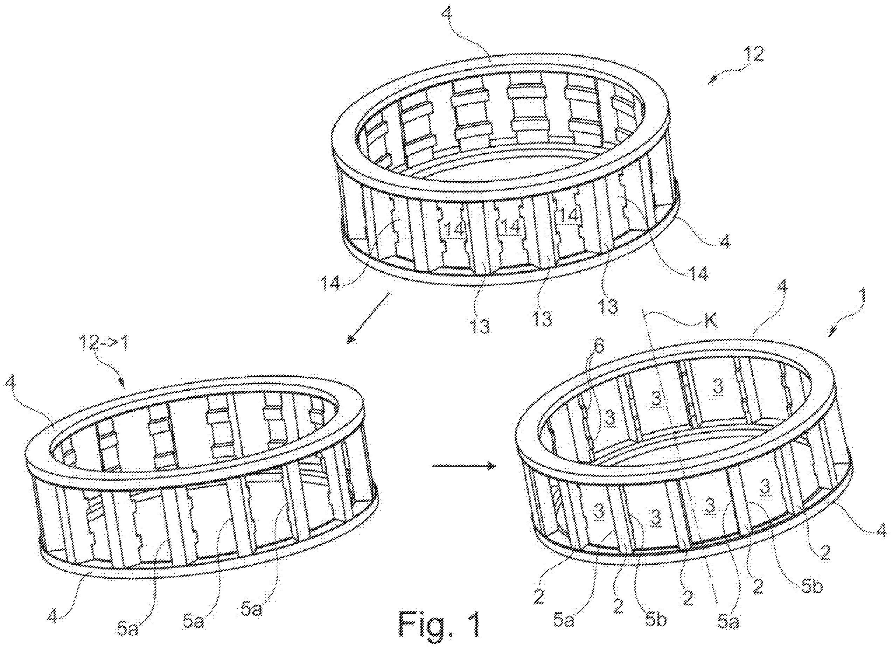

Die Figur 1 zeigt eine schematische Übersichtsdarstellung eines Verfahrens zum Fertigen eines Massivkäfigs 1 als ein Massivbauteil, wie dieser in der Figur 1 unten rechts dargestellt ist. Der Massivkäfig 1 ist zum Einbau in ein Wälzlager ausgebildet und weist eine Mehrzahl von Stegen 2 als Zwischenbereiche auf, welche in eine Umlaufrichtung um eine Käfigdrehachse K regelmäßig verteilt angeordnet sind. Zwischen den Stegen 2 ist jeweils eine Tasche 3 zur Aufnahme eines Wälzkörpers, in diesem Beispiel einer Rolle, angeordnet. Axialendseitig sind Seitenringe 4 angeordnet, wobei sich die Stege 2 und/oder die Taschen 3 zwischen den Seitenringen 4 erstrecken. Der Massivkäfig 1 ist einstückig ausgebildet.

Jeder der Stege 2 weist eine erste Stegseite 5a als erste Taschenseite und eine zweite Stegseite 5b als eine zweite Taschenseite auf. In dem in der Figur 1 gezeigten Ausführungsbeispiel sind die ersten Stegseiten in Uhrzeigerrichtung und die zweiten Stegseiten in einer Gegenuhrzeigerrichtung orientiert. Aus Gründen der Übersichtlichkeit sind die Bezugszeichen nur an zwei Stegen 2 beispielhaft gezeigt. Insbesondere sind alle ersten Stegseiten 5a in die gleiche Richtung und alle zweiten Stegseiten 5b in die gleiche Gegenrichtung orientiert. Im Betrieb des nicht dargestellten Wälzlagers dienen die ersten und zweiten Stegseiten 5a, b als Anlaufflächen für die Wälzkörper, insbesondere für die Rollen. Die ersten und zweiten Stegseiten 5a, b sind insbesondere in einer Umlaufrichtung orientiert. Wie sich ebenfalls aus der Darstellung des Massivkäfigs 1 entnehmen lässt, weist dieser Schnappnasen 6 auf, welche radial innenseitig an die Stege 2 einstückig angeformt sind und welche bei einer Montage des Wälzlagers dazu dienen, dass Rollen in die Taschen 3 eingeschnappt werden können und dort verliersicher gehalten werden.

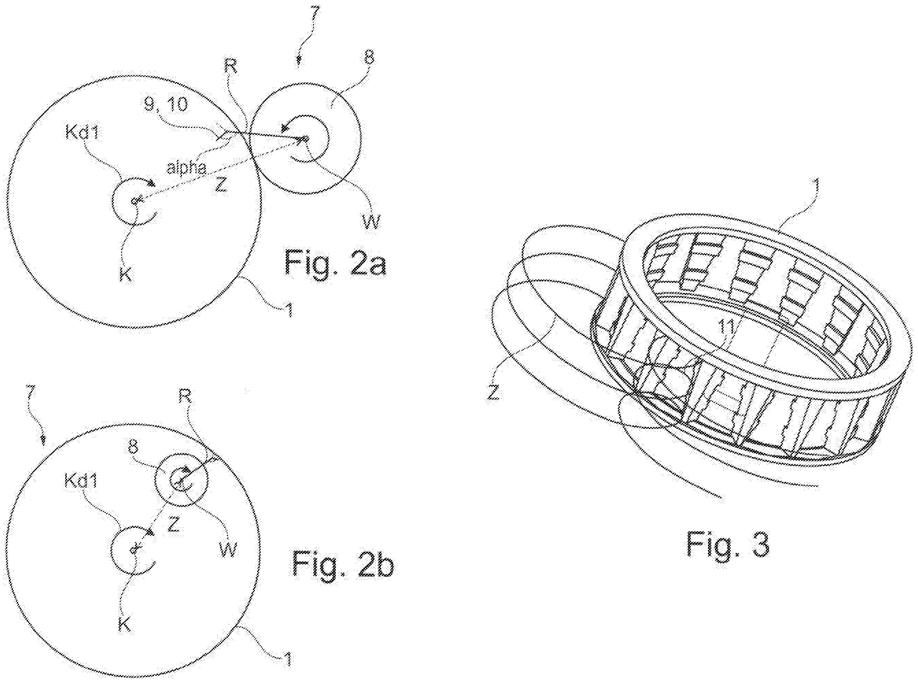

Das Verfahren zum Fertigen des Massivkäfigs erfolgt unter Nutzung einer sogenannten Zykloidbearbeitung, wobei eine Werkzeugschneide in Zykloidenbahnen relativ zu dem Werkstück in diesem Fall zu dem Massivkäfig 1 geführt wird. Zur Erläuterung der Zykloidbearbeitung wird auf die Figuren 2 und 3 verwiesen.

In der Figur 2a ist eine Fertigungseinrichtung 7 in einer axialen Draufsicht stark schematisiert dargestellt. Die Fertigungseinrichtung 7 ist ausgebildet, den Massivkäfig 1 um die Käfigdrehachse K in einer ersten Käfigdrehrichtung KD1 zu rotieren. Ferner weist die Fertigungseinrichtung 7 einen Drehantrieb 8, zum Beispiel einen Spindelantrieb, auf, wobei der Drehantrieb 8 eine Werkzeugdrehachse W definiert. Die Käfigdrehachse K und die Werkzeugdrehachse W sind parallel zueinander, jedoch um einen Zustellabstand Z zueinander versetzt angeordnet. Der Drehantrieb 8 rotiert eine Werkzeugschneide 9 eines Meißels 10 in einer Werkzeugdrehrichtung WD1, wobei die Werkzeugschneide 9 um einen Radialvektor R von der Werkzeugdrehachse W beabstandet ist und gegenüber des Radialvektors R um einen Anstellwinkel α angestellt ist. Durch eine zeitgleiche Rotation des Massivkäfigs 1 um die Käfigdrehachse K und der Werkzeugschneide 9 um die Werkzeugdrehachse W beschreibt die Werkzeugschneide 9 eine Zykloidenbahn relativ zu dem Massivkäfig 1, wie dieser mit dem Bezugszeichen Z in der Figur 3 dargestellt ist. Die Zykloidenbahn Z ist durch eine entsprechende Rotation von Massivkäfig 1 und Werkzeugschneide 9 so ausgebildet, dass Schleifen 11 der Zykloidenbahn Z in den Taschen 3 angeordnet sind. Durch die Führung der Werkzeugschneide 9 entlang der Zykloidenbahn Z können somit die Taschen 3 in dem Massivkäfig 1 gefertigt werden.

In der Figur 2a ist eine Ausführungsform der Fertigungseinrichtung 7 gezeigt, bei der die Werkzeugdrehachse W außerhalb des Massivbauteils, in diesem Ausführungsbeispiel des Massivkäfigs 1 angeordnet ist und damit die Werkzeugschneide 9 radial von außen zu dem Massivbauteil zugestellt wird. In der Figur 2b ist dagegen eine Ausführungsform der Fertigungseinrichtung 7 gezeigt, bei der die Werkzeugdrehachse W innerhalb des Massivbauteils angeordnet ist, so dass die Werkzeugschneide 9 von radial innen zu dem Massivbauteil zugestellt wird.

Die Taschen 3 werden jedoch nicht in einem einzigen Fertigungsschritt mittels der Zykloidbearbeitung eingebracht, vielmehr erfolgt das Einbringen über drei Einzelschritte, wie dies nachfolgend im Zusammenhang mit der Figur 1 weiter erläutert wird.

In der Figur 1, oben Mitte, ist ein Käfigrohling 12 gezeigt, welcher bereits Rohstege 13 an den Positionen der späteren Stege 2 sowie Rohtaschen 14 aufweist. Die Rohtaschen 13 können prinzipiell beliebig eingebracht werden, es ist jedoch fertigungstechnisch besonders einfach, wenn diese über einen Vorzykloidenbearbeitungsschritt als Rohbearbeitungsschritt eingebracht werden.

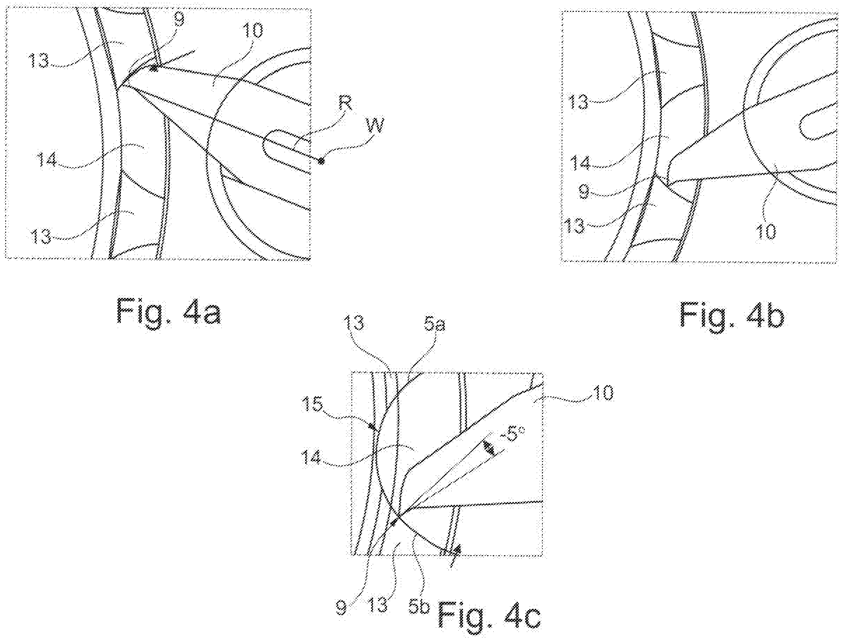

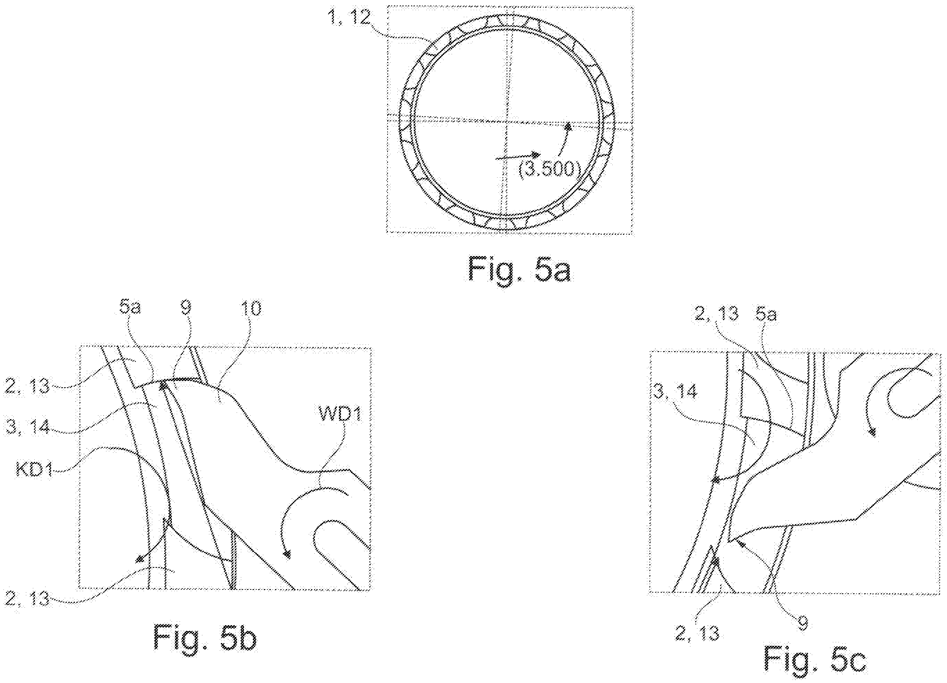

Der Vorzykloidenbearbeitungsschritt wird anhand der Figuren 4a, b, c erläutert. Die Figuren 4a, b, c zeigen jeweils einen Detailausschnitt des Käfigrohlings 12, wobei die Rohstege 13 und die Rohtaschen 14 bereits zu erkennen sind. Die Werkzeugschneide 9 wird entlang einer Vorzykloidenbahn (Figur 4c) 15 geführt. Entlang dieser Bahn werden die Seiten der Rohstege 13, die den späteren ersten Stegseiten 5a entsprechen, mittels eines Schneidvorgangs gefertigt. Dagegen werden - wie sich dies aus der Figur 4b ergibt - die Seiten der Rohstege 13, welche später den zweiten Stegseiten 5b entsprechen, schabend gefertigt. Anders ausgedrückt ist der Spanwinkel der Werkzeugschneide 9 in der Figur 4a positiv und kann in der Figur 5b negativ werden. In der Figur 4c ist der Spanwinkel in dem Vorzykloidenbearbeitungsschritt an der zweiten Stegseite 5b der Figur 4b mit -5 Grad eingezeichnet.

Durch den Vorzykloidenbearbeitungsschritt werden somit Durchbrüche in Form der Rohtaschen 14 in den Käfigrohling 12 eingebracht. Allerdings ist die Oberflächengüte, insbesondere der Stegseite, welche später der zweiten Stegseite 5b entspricht und die schabend und/oder mit einem negativen Spanwinkel bearbeitet wurde, nicht ausreichend genau für die Anforderung des Massivkäfigs 1. Aus diesem Grund erfolgt die Endbearbeitung der ersten und der zweiten Stegseite 5a, b über einen ersten und einen zweiten Zykloidenbearbeitungsschritt.

Das Ergebnis des ersten Zykloidenbearbeitungsschritts ist in der Figur 1 unten links dargestellt, wobei in dem ersten Zykloidenbearbeitungsschritt die ersten Stegseiten 5a endbearbeitet werden. Im Rahmen des ersten Zykloidenbearbeitungsschritts wird die Werkzeugschneide 9 des Meißels 10 oder eine weitere Werkzeugschneide 9 eines weiteren Meißels 10 entlang einer ersten Zykloidenbahn geführt. Allerdings ist die erste Zykloidenbahn in Umlaufrichtung um die Käfigdrehachse K versetzt zur Vorzykloidenbahn des Vorzykloidenbearbeitungsschritts angeordnet.

Die Figuren 5a, b, c zeigen den ersten Zykloidenbearbeitungsschritt. Aus der Figur 5a ist zu entnehmen, dass für den ersten Zykloidenbearbeitungsschritt der Massivkäfig 1 beziehungsweise in dem Zustand der Käfigrohling 12 um einen Winkel in diesem Beispiel von 3,5 Grad um die Käfigdrehachse K verdreht wird. Dies resultiert in einem Phasenversatz der ersten Zykloidenbahn gegenüber der VorZykloidenbahn um einen Betrag von den genannten 3,5 Grad. Insbesondere sind die Minima und/oder die Maxima der ersten Zykloidenbahn und der VorZykloidenbahn um den Phasenversatz um die Käfigdrehachse K zueinander versetzt.

In der Figur 5b ist das Eintauchen der Werkzeugschneide 9 gezeigt, wobei zu erkennen ist, dass die Werkzeugschneide 9 entlang der ersten Zykloidenbahn so geführt wird, dass die Werkzeugschneide 9 die ersten Stegseiten 5a schneidet . Die Figur 5c zeigt den Austritt der Werkzeugschneide 9 aus der Tasche 3, wobei zu erkennen ist, dass diese beabstandet und/oder kontaktlos zu der Seite der Rohstege 13 geführt wird, welche später die zweite Stegseite 5b bilden. Somit werden in dem ersten Zykloidenbearbeitungsschritt ausschließlich die ersten Stegseiten 5a gefertigt. Die Käfigdrehrichtung KD1 des Massivkäfigs beziehungsweise Käfigrohlings 12 und die Werkzeugdrehrichtung WD1 der Werkzeugschneide 9 um die Werkzeugdrehachse W sind zueinander gegensinnig.

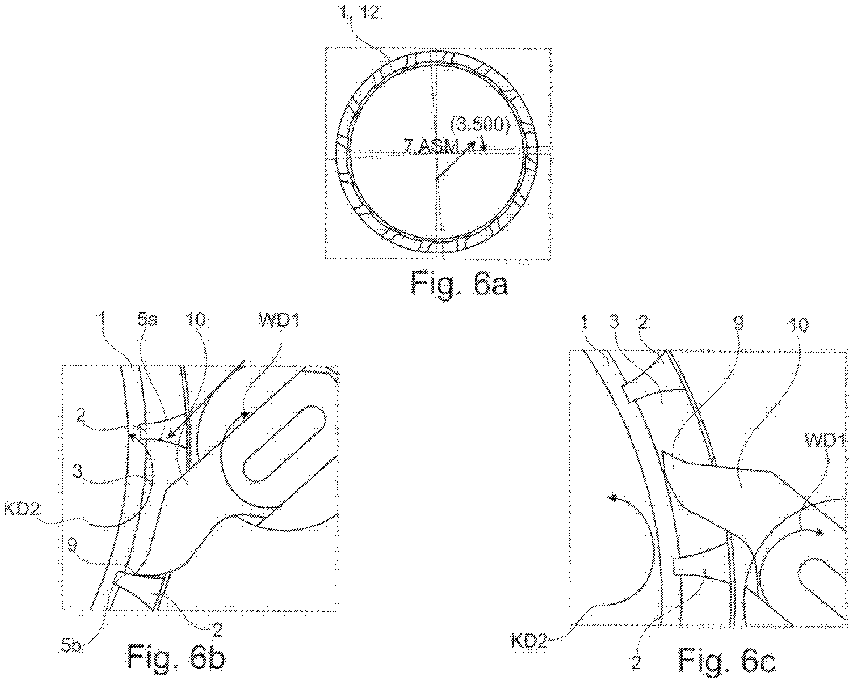

Nachdem der erste Zykloidenbearbeitungsschritt durchgeführt wurde und insbesondere die ersten Stegseiten 5a endbearbeitet wurden, erfolgt ein zweiter Zykloidenbearbeitungsschritt. Bei diesem zweiten Zykloidenbearbeitungsschritt, wie dieser in den Figuren 6a, b, c dargestellt ist, wird der Anstellwinkel alpha der Werkzeugschneide 9 verändert. Insbesondere wird der Meißel 10 um 180 Grad umgedreht. Zudem wird die zweite Zykloidenbahn ebenfalls phasenversetzt zur Vorzykloidenbahn, in diesem Fall jedoch um 3,5° in Gegenrichtung.

Ferner werden die Drehrichtungen des Massivkäfigs 1 beziehungsweise des Käfigrohlings 12 und der Werkzeugschneide 9 um die Werkzeugdrehachse W umgedreht, so dass der Massivkäfig 1 bzw. der Käfigrohling 12 um eine Käfiggegendrehrichtung KD2 und die Werkzeugschneide in einer Werkzeuggegendrehrichtung WD2 rotiert werden. Im Ergebnis wird die Werkzeugschneide 9 so geführt, dass in dem zweiten Zykloidenbearbeitungsschritt die zweiten Stegseiten 5b geschnitten werden und der Spanwinkel der Werkzeugschneide 9 negativ ist. Beim Austritt ist die Werkzeugschneide 9 wieder kontaktfrei zu den ersten Stegseiten 5a. Die erste und die zweite Zykloidenbahn sind in der Form gleich, jedoch gegenläufig und insgesamt um den doppelten Phasenversatz, also in diesem Beispiel um 7° zueinander versetzt.

Somit werden sowohl die ersten Stegseiten 5a als auch die zweiten Stegseiten 5b geschnitten beziehungsweise mit einem negativen Spanwinkel der Werkzeugschneide 9 bearbeitet, sodass diese eine hohe Oberflächengüte aufweisen beziehungsweise als eine Endbearbeitung dargestellt werden können.

Nebenbei bemerkt, werden durch den ersten und den zweiten Zykloidenbearbeitungsschritt auch die Schnappnasen 6 gefertigt.

Prinzipiell ist es möglich, einen Massivkäfig 1 mit Taschen 3 zu bilden, wobei die Taschen 3 in einer radialen Draufsicht von außen rechteckförmig ausgebildet sind. Dies ist in der Figur 1 dargestellt. Es ist jedoch auch möglich, während der Bearbeitung den Zustellabstand Z in Abhängigkeit einer axialen Position der Werkzeugschneide 9 zu ändern, sodass trapezförmige Taschen 3 gebildet werden, wie diese in der Figur 3 dargestellt sind. Der Übergang von rechteckförmigen Taschen 3 zu trapezförmigen Taschen 3 kann durch eine Anpassung der Programmierung der Fertigungseinrichtung 6 umgesetzt werden.

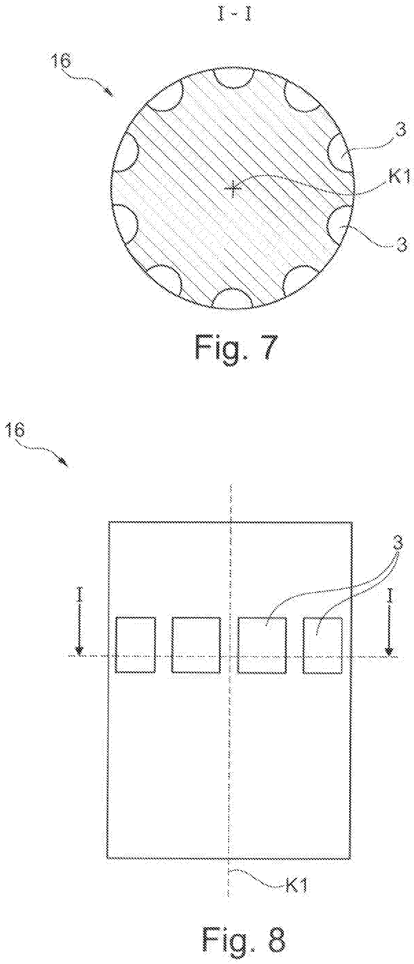

In der Figur 7 und 8 ist als ein weiteres Ausführungsbeispiel der Erfindung ein Massivbauteil ausgebildet als eine Vollwelle 16 in einer Schnittdarstellung bzw. in einer radialen Draufsicht gezeigt. Die Vollwelle 16 weist eine Mehrzahl von Taschen 3 auf, die in diesem Ausführungsbeispiel als Sacktaschen und nicht wie in den vorhergehenden Figuren als Durchgangstaschen ausgebildet sind. Die Taschen 3 können wie zuvor bei dem Massivkäfig 1 beschrieben über die Verfahrensfolge des Vorzykloidenbearbeitungsschritts und den Zykloidenbearbeitungsschritten eingebracht werden.

### Bezugszeichenliste

- 1: Massivkäfig
- 2: Stege
- 3: Taschen
- 4: Seitenringe
- 5a: erste Steigseiten
- 5b: zweite Stegseiten
- 6: Schnappnasen
- 7: Fertigungseinrichtung
- 8: Drehantrieb
- 9: Werkzeugschneide
- 10: Meißel
- 11: Schleifen
- 12: Käfigrohling
- 13: Rohstege
- 14: Rohtaschen
- 15: Vorzykloidenbahn
- 16: Vollwelle
- α: Anstellwinkel
- K1: Käfigdrehachse
- R: Radialvektor
- KD1: Käfigdrehrichtung
- KD2: Käfiggegendrehrichtung
- W: Werkzeugdrehachse
- WD1: Werkzeugdrehrichtung
- WD2: Werkzeuggegendrehrichtung
- Z: Zustellabstand

## Patentansprüche

1. Verfahren zum Fertigen eines Massivbauteils, insbesondere eines Massivkäfigs (1) für ein Wälzlager,
wobei das Massivbauteil eine Bauteildrehachse (K1) definiert und eine Mehrzahl von Taschen (3) aufweist, wobei die Taschen (3) jeweils eine erste und eine zweite Taschenseite (5a,b) aufweisen, umfassend die Schritte:
Ausbilden eines Bauteilrohlings (12) in einem Rohbearbeitungsschritt mittels eines Rohbearbeitungswerkzeugs, wobei der Bauteilrohling (12) eine Mehrzahl von Rohtaschen (14) bildet;
Ausbilden der ersten Taschenseiten (5a) in Endkontur mittels einer Werkzeugschneide (9), wobei die Werkzeugschneide (9) in einem ersten Zykloidenbearbeitungsschritt relativ zu dem, um die Bauteildrehachse (K1) in einer Bauteildrehrichtung (KD1) rotierenden Bauteilrohling (12) entlang einer ersten Zykloidenbahn zur Bearbeitung der Rohtaschen (14) geführt wird, wobei die ersten Taschenseiten (5a) mittels der Werkzeugschneide (9) geschnitten werden und wobei ein Spanwinkel der Werkzeugschneide (9) im Bereich von - 15° bis 0° liegt;
Umkehren der Bauteildrehrichtung (KD1) des Bauteilrohlings (12) und rotieren des Bauteilrohlings (12) in eine Bauteilgegendrehrichtung (KD2);
Ausbilden der zweiten Taschenseiten (5b) in Endkontur mittels einer weiteren Werkzeugschneide (9), wobei die weitere Werkzeugschneide (9) in einem zweiten Zykloidenbearbeitungsschritt relativ zu dem um die Bauteildrehachse (K1) in der Bauteilgegendrehrichtung (KD2) rotierenden Bauteilrohling (12) entlang einer zweiten Zykloidenbahn zur Bearbeitung der Rohtaschen (14) geführt wird, wobei die zweiten Taschenseiten (5b) mittels der weiteren Werkzeugschneide (9) geschnitten werden, und wobei ein Spanwinkel der weiteren Werkzeugschneide (9) im Bereich von - 15° bis 0° liegt.

2. Verfahren nach Anspruch 1, **dadurch gekennzeichnet, dass** die Werkzeugschneide (9) und der Bauteilrohling (12) entgegengesetzt rotieren, sofern die Werkzeugschneide (9) an einem Außenumfang des Bauteilrohlings (12) beginnend schneidet, oder dass die Werkzeugschneide (9) und der Bauteilrohling (12) in gleicher Richtung rotieren, sofern der Bauteilrohling (12) ringförmig ausgebildet ist und die Werkzeugschneide (9) an einem Innenumfang des Bauteilrohlings (12) beginnend schneidet.

3. Verfahren nach Anspruch 1 oder Anspruch 2, **dadurch gekennzeichnet, dass** in dem Rohbearbeitungsschritt der Bauteilrohling (12) um die Bauteildrehachse (K1) und das Rohbearbeitungswerkzeug um eine Werkzeugdrehachse (W) rotiert werden, wobei eine Kopplung der Rotationsbewegungen der Bauteildrehache (K1) und der Werkzeugdrehachse (W) erfolgt, dass in den Zykloidenbearbeitungsschritten der Bauteilrohling (12) um die Bauteildrehachse (K1) und die Werkzeugschneiden (9) um die Werkzeugdrehachse (W) rotiert werden, und dass vor Durchführung des jeweiligen Zykloidenbearbeitungsschritts die Bauteildrehachse (K1) und die Werkzeugdrehachse (W) entkoppelt, der Bauteilrohling (12) um einen Winkel alpha um die Bauteildrehache (K1) verdreht und die Bauteildrehachse (K1) mit der Werkzeugdrehachse (W) wieder gekoppelt wird.

4. Verfahren nach Anspruch 3, **dadurch gekennzeichnet, dass** ein Zustellabstand (Z) zwischen der Bauteildrehachse (K1) und der Werkzeugdrehachse (W) verändert wird.

5. Verfahren nach Anspruch 4, **dadurch gekennzeichnet, dass** der Zustellabstand (Z) in Abhängigkeit einer axialen Position der Werkzeugschneide (9) relativ zu dem Bauteilrohling (12) verändert wird, um die Taschen (3) in einer Richtung senkrecht auf die Bauteildrehachse (K1) und auf einen äußeren Umfang des Massivbauteils gesehen trapezförmig auszubilden.

6. Verfahren nach einem der vorhergehenden Ansprüche 1 bis 5, **dadurch gekennzeichnet**, das jede Tasche (3) zwei Stirnseiten aufweist, wobei mindestens eine der Stirnseiten in Richtung der Bauteildrehachse (K1) gesehen annähernd trapezförmig ausgebildet wird.

7. Verfahren nach einem der vorhergehenden Ansprüche, **dadurch gekennzeichnet, dass** die Rohtaschen (14) in den Bauteilrohling (12) durch einen Vorzykloidenbearbeitungsschritt eingebracht werden, wobei das Rohbearbeitungswerkzeug relativ zu dem, um die Bauteildrehachse (K1) in einer Bauteildrehrichtung (KD1) rotierenden Bauteilrohling (12) entlang mindestens einer weiteren Zykloidenbahn zur Bildung der Rohtaschen (14) geführt wird.

8. Verfahren nach einem der vorhergehenden Ansprüche, **dadurch gekennzeichnet, dass** das Massivbauteil als Massivkäfig (1) für ein Wälzlager ausgebildet wird, wobei der Massivkäfig (1) eine Käfigdrehachse (K) definiert und eine Mehrzahl von Stegen (2) aufweist, welche die Taschen (3) zur Aufnahme von Wälzkörpern bilden, wobei die Taschen (3) jeweils die erste und zweite Taschenseite (5a,b) zur Anlage der Wälzkörper in Umlaufrichtung um die Käfigdrehachse (K) aufweisen.

9. Massivbauteil, insbesondere ein Massivkäfig (1) für ein Wälzlager oder eine Vollwelle, wobei das Massivbauteil eine Bauteildrehachse (K1) definiert und eine Mehrzahl von Taschen (3) aufweist, wobei die Taschen (3) jeweils eine erste und eine zweite Taschenseite (5a, b) und zwei Stirnseiten aufweisen,
**dadurch gekennzeichnet, dass**
das Massivbauteil durch das Verfahren nach einem der vorhergehenden Ansprüche gefertigt ist.

10. Massivbauteil nach Anspruch 9, **dadurch gekennzeichnet, dass** eine Oberfläche der Taschen (3) im Bereich der ersten und der zweiten Taschenseiten (5a, 5b) eine gemittelte Rautiefe Rz von maximal 10 µm aufweist.

11. Massivbauteil nach Anspruch 9 oder Anspruch 10, **dadurch gekennzeichnet dass** ein Umfang einer jeden Tasche (3) in einer Richtung senkrecht auf die Bauteildrehachse (K1) und auf einen äußeren Umfang des Massivbauteils gesehen und/oder mindestens eine Stirnseite einer jeden Tasche (3) annähernd trapezförmig ausgebildet ist/sind.

12. Massivbauteil nach einem der Ansprüche 9 bis 11, **dadurch gekennzeichnet dass** ein Umfang einer jeden Tasche (3) in einer Richtung senkrecht auf die Bauteildrehachse (K1) und auf einen äußeren Umfang des Massivbauteils gesehen und/oder ein Umfang mindestens einer der Stirnseiten unsymmetrisch ausgebildet ist.

13. Massivbauteil nach einem der Ansprüche 9 bis 12, **dadurch gekennzeichnet, dass** das Massivbauteil einen Massivkäfig (1) für ein Wälzlager bildet und ringförmig ausgebildet ist, wobei der Massivkäfig (1) eine Käfigdrehachse (K) definiert und eine Mehrzahl von Stegen (2) aufweist, welche die Taschen (3) zur Aufnahme von Wälzkörpern bilden, wobei die Taschen (3) jeweils die erste und zweite Taschenseite (5a,b) zur Anlage der Wälzkörper in Umlaufrichtung um die Käfigdrehachse (K) aufweisen.

14. Massivbauteil nach einem der Ansprüche 9 bis 12, **dadurch gekennzeichnet, dass** das Massivbauteil einen Massivkäfig (1) für ein Wälzlager bildet und der Massivkäfig (1) halbschalenförmig ausgebildet ist, wobei der Massivkäfig (1) eine Käfigdrehachse (K) definiert und eine Mehrzahl von Stegen (2) aufweist, welche die Taschen (3) zur Aufnahme von Wälzkörpern bilden, wobei die Taschen (3) jeweils die erste und zweite Taschenseite (5a,b) zur Anlage der Wälzkörper in Umlaufrichtung um die Käfigdrehachse (K) aufweisen.

15. Massivbauteil nach einem der Ansprüche 13 oder 14, **dadurch gekennzeichnet, dass** ein äußerer Umfang des Massivkäfigs (1) einen Durchmesser von größer als 250 mm aufweist.

## Claims

1. A method for manufacturing a solid component, in particular a solid cage (1) for a roller bearing,
the solid component defining a component axis of rotation (K1) and having a plurality of pockets (3), the pockets (3) each having a first and a second pocket side (5a, b), comprising the steps:
forming of a component blank (12) in a rough machining step by means of a rough machining tool, the component blank (12) forming a plurality of raw pockets (14);
forming of the first pocket sides (5a) in the final contour by means of a tool blade (9), wherein, in a first cycloidal machining step, the tool blade (9) is guided relative to the component blank (12) rotating about the component rotation axis (K1) in a component rotation direction (KD1) along a first cycloidal path for machining the rough pockets (14), wherein the first pocket sides (5a) are cut by means of the tool blade (9), and wherein a cutting angle of the tool blade (9) is in the range of -15° to 0°;
reversing of the component rotation direction (KD1) of the component blank (12) and rotating the component blank (12) in a component counter-rotation direction (KD2);
configuring of the second pocket sides (5b) in the final contour by means of a further tool blade (9), wherein the further tool blade (9), in a second cycloidal machining step, is guided relative to the component blank (12) rotating about the component rotation axis (K1) in a component counter-rotation direction (KD2) along a second cycloidal path for machining the rough pockets (14), wherein the second pocket sides (5b) are cut by means of the further tool blade (9), and/or wherein a cutting angle of the further tool blade (9) is in the range of -15° to 0°.

2. The method according to claim 1, **characterised in that** the tool blade (9) and the component blank (12) rotate in opposite directions, provided that the tool blade (9) begins to cut on an outer circumference of the component blank (12), or that the tool blade (9) and the component blank (12) rotate in the same direction, provided the component blank (12) is ringshaped and the tool blade (9) begins to cut on an inner circumference of the component blank (12).

3. The method according to claim 1 or claim 2, **characterised in that** in the rough machining step the component blank (12) is rotated about the component rotation axis (K1) and the rough machining tool is rotated about a tool rotation axis (W), with a coupling of the rotational movements of the component rotation axis (K1) and the tool axis of rotation (W) **in that** the component blank (12) is rotated about the component axis of rotation (K1) and the tool blades (9) are rotated about the tool axis of rotation (W) in the cycloidal machining steps, and that the component axis of rotation (K1) and the tool rotation axis (W) are decoupled before the respective cycloidal machining step is carried out, the component blank (12) is rotated by an angle alpha around the component rotation axis (K1), and the component rotation axis (K1) is again coupled with the tool rotation axis (W).

4. The method according to claim 3, **characterised in that** a feed distance (Z) between the component axis of rotation (K1) and the tool axis of rotation (W) is changed.

5. The method according to claim 4, **characterised in that** the feed distance (Z) is changed as a function of an axial position of the tool blade (9) relative to the component blank (12) to move the pockets (3) in a direction perpendicular to the component axis of rotation (K1) and to form a trapezoidal shape as seen on an outer circumference of the solid component.

6. The method according to any one of the preceding claims 1 through 5, **characterised in that** each pocket (3) has two end faces, at least one of the end faces seen in the direction of the component axis of rotation (K1) are formed to be approximately trapezoidal in shape.

7. The method according to any one of the preceding claims, **characterised in that** the rough pockets (14) are introduced into the component blank (12) by a pre-cycloidal machining step, wherein the roughing tool is guided relative to the component blank (12) rotating about the component rotation axis (K1) in a component rotation direction (KD1) along at least one further cycloidal path to form the rough pockets (14).

8. The method according to any one of the preceding claims, **characterised in that** the solid component is designed as a solid cage (1) for a roller bearing, the solid cage (1) defining a cage axis of rotation (K) and having a plurality of webs (2) which hold the pockets (3) for receiving rolling elements, wherein the pockets (3) each have the first and second pocket side (5a, b) for bearing against the rolling elements in the circumferential direction about the cage axis of rotation (K).

9. A solid component, in particular a solid cage (1) for a roller bearing or a solid shaft, the solid component defining a component axis of rotation (K1) and having a plurality of pockets (3), the pockets (3) each having a first and a second pocket side (5a, b) and having two end faces,
**characterised in that**
the solid component is manufactured by the method according to any one of the preceding claims.

10. The solid component according to claim 9, **characterised in that** a surface of the pockets (3) in the region of the first and second pocket sides (5a, 5b) has an average roughness depth Rz of at most 10 µm.

11. The solid component according to claim 9 or claim 10, **characterised in that** a circumference of each pocket (3) seen in a direction perpendicular to the component axis of rotation (K1) and on an outer circumference of the solid component and/or at least one end face of each pocket (3) is/are formed to be approximately trapezoidal.

12. The solid component according to any one of claims 9 through 11, **characterised in that** a circumference of each pocket (3) seen in a direction perpendicular to the component axis of rotation (K1) and on an outer circumference of the solid component and/or a circumference of at least one of the end faces is formed to be asymmetrical.

13. The solid component according to any one of claims 9 through 12, **characterised in that** the solid component forms a solid cage (1) for a rolling bearing and is annular, wherein the solid cage (1) defines a cage axis of rotation (K) and has a plurality of webs (2) which form the pockets (3) for receiving rolling elements, the pockets (3) each having the first and second pocket sides (5a, b) for bearing the rolling elements in the circumferential direction about the cage axis of rotation (K).

14. The solid component according to any one of claims 9 through 12, **characterised in that** the solid component forms a solid cage (1) for a rolling bearing and the solid cage (1) is half-shell-shaped, wherein the solid cage (1) defines a cage axis of rotation (K) and a plurality of webs (2) which form the pockets (3) for receiving rolling elements, the pockets (3) each having the first and second pocket sides (5a, b) for contacting the rolling elements in the circumferential direction about the cage rotation axis (K).

15. The solid component according to any one of claims 13 or 14, **characterised in that** an outer circumference of the solid cage (1) has a diameter of greater than 250 mm.

## Revendications

1. Procédé de fabrication d'un composant solide, notamment une cage solide (1) pour palier de roulement,
le composant solide définissant un axe de rotation de composant (K1) ét comportant une pluralité de poches (3), les poches (3) ayant chacune un premier et un second côté de poche (5a, b), comprenant les étapes suivantes consistant à :
former une ébauche de composant (12) lors d'une étape d'ébauchage au moyen d'un outil d'ébauchage, l'ébauche de composant (12) formant une pluralité de poches brutes (14) ;
former les premiers côtés de la poche (5a) dans le contour final au moyen d'un tranchant d'outil (9), le tranchant d'outil (9) étant guidé lors d'une première étape de traitement cycloïde par rapport à l'ébauche de composant (12) tournant autour de l'axe de rotation de composant (K1) dans une direction de rotation de composant (KD1) le long d'une première trajectoire cycloïde pour traiter les poches brutes (14), les premiers côtés de la poche (5a) étant découpés au moyen du tranchant d'outil (9) et un angle de coupe du tranchant d'outil (9) se situant dans la plage allant de -15° à 0° ;
inverser la direction de rotation du composant (KD1) de l'ébauche de composant (12) et faire tourner l'ébauche de composant (12) dans une direction contraire du composant (KD2) ;
former les seconds côtés de poche (5b) dans le contour final au moyen d'un autre tranchant d'outil (9), l'autre tranchant d'outil (9) étant guidé lors d'une seconde étape de traitement cycloïde par rapport à l'ébauche de composant (12) tournant autour de l'axe de rotation de composant (K1) dans la direction contraire du composant (KD2), le long d'une seconde trajectoire cycloïde pour traiter les poches brutes (14), les seconds côtés de poche (5b) étant découpés au moyen de l'autre tranchant d'outil (9) et un angle de coupe de l'autre tranchant d'outil (9) se situant dans la plage allant de -15° à 0°.

2. Procédé selon la revendication 1, **caractérisé en ce que** le tranchant d'outil (9) et l'ébauche de composant (12) tournent dans le sens opposé, à condition que le tranchant d'outil (9) commence à couper sur une circonférence extérieure de l'ébauche de composant (12) ou **en ce que** le tranchant d'outil (9) et l'ébauche de composant (12) tournent dans le même sens, à condition que l'ébauche de composant (12) soit en forme d'anneau et que le tranchant d'outil (9) commence à couper sur une circonférence intérieure de l'ébauche de composant (12).

3. Procédé selon la revendication 1 ou la revendication 2, **caractérisé en ce que** lors de l'étape d'ébauchage, l'ébauche de composant (12) tourne autour de l'axe de rotation de composant (K1) et l'outil d'ébauchage autour d'un axe de rotation d'outil (W), un couplage des mouvements de rotation de l'axe de rotation de composant (K1) et de l'axe de rotation d'outil (W) étant effectué, **en ce que** l'ébauche de composant (12) tourne autour de l'axe de rotation de composant (K1) et les tranchants d'outil (9) autour de l'axe de rotation d'outil (W) lors des étapes de traitement cycloïde et **en ce que** l'axe de rotation de composant (K1) et l'axe de rotation d'outil (W) sont découplés avant la réalisation des étapes de traitement cycloïde respectives, l'ébauche de composant (12) étant de nouveau entraînée en rotation d'un angle alpha autour de l'axe de rotation de composant (K1) et l'axe de rotation de composant (K1) étant à nouveau couplé avec l'axe de rotation d'outil (W).

4. Procédé selon la revendication 3, **caractérisé en ce que** la distance d'avance (Z) entre l'axe de rotation de composant (K1) et l'axe de rotation de l'outil (W) est modifiée.

5. Procédé selon la revendication 4, **caractérisé en ce que** la distance d'avance (Z) est modifiée en fonction d'une position axiale du tranchant d'outil (9) par rapport à l'ébauche de composant (12) afin de conférer aux poches (3) une forme trapézoïdale vues dans une direction perpendiculaire à l'axe de rotation de composant (K1) et sur une circonférence extérieure du composant solide.

6. Procédé selon l'une quelconque des revendications 1 à 5 précédentes, **caractérisé en ce que** chaque poche (3) présente deux faces avant, au moins une des faces avant ayant une forme sensiblement trapézoïdale dans la direction de l'axe de rotation de composant (K1).

7. Procédé selon l'une quelconque des revendications précédentes, **caractérisé en ce que** les poches brutes (14) sont introduites dans l'ébauche de composant (12) par une étape de traitement cycloïde préalable, l'outil d'ébauchage étant guidé par rapport à l'ébauche de composant (12) tournant autour de l'axe de rotation de composant (K1), dans une direction de rotation de composant (KD1) le long d'au moins une autre trajectoire cycloïde pour former les poches brutes (14).

8. Procédé selon l'une quelconque des revendications précédentes, **caractérisé en ce que** le composant solide est conçu comme une cage solide (1) pour un palier de roulement, la cage solide (1) définissant un axe de rotation de cage (K) et présentant une pluralité de traverses (2), qui forment les poches (3) pour recevoir des éléments de roulement, les poches (3) ayant chacune des premier et second côtés de poche (5a, b) pour porter les éléments de roulement dans la direction circonférentielle autour de l'axe de rotation de cage (K).

9. Composant solide, en particulier cage solide (1) pour un palier de roulement ou un arbre plein, le composant solide définissant un axe de rotation de composant (K1) et ayant une pluralité de poches (3), les poches (3) ayant chacune un premier et un second côté de poche (5a, b) et deux faces avant,
**caractérisé en ce que**
le composant solide est fabriqué par le procédé selon l'une quelconque des revendications précédentes.

10. Composant solide selon la revendication 9, **caractérisé en ce qu'**une surface des poches (3) dans la région des premier et second côtés de poche (5a, 5b) a une profondeur de rugosité moyenne Rz d'au plus 10 µm.

11. Composant solide selon la revendication 9 ou la revendication 10, **caractérisé en ce qu'**une circonférence de chaque poche (3) vue dans une direction perpendiculaire à l'axe de rotation du composant (K1) et à une circonférence extérieure du composant solide et/ou au moins une face avant de chaque poche (3) est/sont approximativement trapézoïdales.

12. Composant solide selon l'une quelconque des revendications 9 à 11, **caractérisé en ce que** la circonférence de chaque poche (3), vue dans une direction perpendiculaire à l'axe de rotation de composant (K1) et à une circonférence extérieure du composant solide et/ou une circonférence d'au moins une des faces d'extrémité est asymétrique.

13. Composant solide selon l'une quelconque des revendications 9 à 12, **caractérisé en ce que** le composant solide forme une cage solide (1) pour un palier de roulement et est conçue sous forme annulaire, la cage solide (1) définissant un axe de rotation de cage (K) et présentant une pluralité de traverses (2), qui forment les poches (3) pour recevoir des éléments de roulement, les poches (3) ayant chacune des premier et second côtés de poche (5a, b) pour porter les éléments de roulement dans la direction circonférentielle autour de l'axe de rotation de cage (K).

14. Composant solide selon l'une quelconque des revendications 9 à 12, **caractérisé en ce que** le composant solide forme une cage solide (1) pour un palier de roulement et la cage solide (1) est conçue sous forme de demi-coquille, la cage solide (1) définissant un axe de rotation de cage (K) et présentant une pluralité de traverses (2), qui forment les poches (3) pour recevoir des éléments de roulement, les poches (3) ayant chacune des premier et second côtés de poche (5a, b) pour porter les éléments de roulement dans la direction circonférentielle autour de l'axe de rotation de cage (K).

15. Composant solide selon l'une quelconque des revendications 13 ou 14, **caractérisé en ce qu'**une circonférence extérieure de la cage solide (1) a un diamètre supérieur à 250 mm.
